# EUROPEAN PATENT APPLICATION

(11) **EP 4 156 756 A1**
(43) Date of publication of application: **29.03.2023**
(21) Application number: 20943939.7
(22) Date of filing: 10.07.2020
(51) Int. Cl.: H04W 24/08, H04W 76/15

(54) **MEASUREMENT GAP CONFIGURATION METHOD, NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: RGTH
(86) International application number: PCT/CN2020/101484
(87) International publication number: WO 2022/006909

(57) **Abstract**

Embodiments of the present invention provide a measurement gap configuration method, a network device, and a terminal device, used for avoiding a long interruption influence caused by the radio frequency chain handover/switching of the terminal device, and improving the transmission performance of the network device and the terminal device. The embodiments of the present invention can comprise: the network device determines the configuration information of a first measurement gap; and the network device transmits the configuration information of the first measurement gap to the terminal device, wherein the configuration information of the first measurement gap is used for the terminal device to perform measurement.

## Description

### TECHNICAL FIELD

The present disclosure relates to the communication field, and in particular to a method for configuring a measurement gap, a network device and a terminal device.

### BACKGROUND

At present, the research of new radio (NR) access system mainly considers two frequency ranges, including frequency range 1 (FR1) and frequency range 2 (FR2), here frequency domain ranges included in FR1 and FR2 are shown in Table 1.

**Table 1**

| Definition of frequency range | Corresponding frequency domain range |
|---|---|
| FR1 | 410 MHz - 7.125 GHz |
| FR2 | 24.25 GHz - 52.6 GHz |

Existing NR measurements do not coordinate the configurations on respective active carriers well when configuring the measurement gap. It is possible for master cell group (MCG) and secondary cell group (SCG) to be configured with different gaps through "per FR gap" (gapFRl or gapFR2), but it is impossible to flexibly configure a gap for a certain associated carrier or a group of associated carriers.

### SUMMARY

Embodiments of the present disclosure provide a method for configuring a measurement gap, a network device and a terminal device, which are used for avoiding the longer interrupt influence caused by the handover/switching of the radio frequency (RF) chain of the terminal device and improving the transmission performance of the network device and the terminal device.

In a first aspect of the present disclosure, a method for configuring a measurement gap is provided. The method includes that: a network device determines configuration information of a first measurement gap; and the network device transmits the configuration information of the first measurement gap to a terminal device, the configuration information of the first measurement gap being used for the terminal device to perform a measurement.

In a second aspect of the present disclosure, a method for configuring a measurement gap is provided. The method includes that: a terminal device receives configuration information of a first measurement gap from a network device; and the terminal device performs a measurement according to the configuration information of the first measurement gap.

In another aspect of the present disclosure, a network device is provided. The network device has a function of avoiding the longer interrupt influence caused by the handover/switching of the radio frequency chain of the terminal device and improving the transmission performance of the network device and the terminal device. This function can be realized by hardware, or can be realized by hardware executing corresponding software. The hardware or software includes one or more modules corresponding to the above function.

In another aspect of the present disclosure, a terminal device is provided. The terminal device has a function of avoiding the longer interrupt influence caused by the handover/switching of the radio frequency chain of the terminal device and improving the transmission performance of the network device and the terminal device. This function can be realized by hardware, or can be realized by hardware executing corresponding software. The hardware or software includes one or more modules corresponding to the above function.

In another aspect of the present disclosure, a network device is provided. The network device includes a memory storing executable program codes; and a processor and a transceiver that are coupled to the memory. The processor is configured to call the executable program codes stored in the memory to execute the method in the first aspect of the embodiment of the present disclosure, and the transceiver is configured to execute the method in the first aspect of the embodiment of the present disclosure.

In another aspect of the present disclosure, a terminal device is provided. The terminal device includes a memory storing executable program codes; and a processor and a transceiver that are coupled to the memory. The processor is configured to call the executable program codes stored in the memory to execute the method in the second aspect of the embodiment of the present disclosure, and the transceiver is configured to execute the method in the second aspect of the embodiment of the present disclosure.

In another aspect of the present disclosure, a computer-readable storage medium is provided. The computer-readable storage medium includes instructions that, when running on a computer, cause the computer to execute the method as described in the first or second aspect of the present disclosure.

In another aspect of the present disclosure, a computer program product is provided. When running on a computer, the computer program product causes the computer to execute the method as described in the first or second aspect of the present disclosure.

In another aspect of the present disclosure, a chip is provided. The chip is coupled with a memory in the network device, which causes the chip to call program instructions stored in the memory when running and causes the network device to execute the method as described in the first aspect of the present disclosure.

In another aspect of the present disclosure, a chip is provided. The chip is coupled with a memory in the terminal device, which causes the chip to call program instructions stored in the memory when running and causes the terminal device to execute the method as described in the second aspect of the present disclosure.

The technical solution provided by the embodiments of the present disclosure has the following beneficial effects.

According to the embodiments of the present disclosure, a network device determines configuration information of a first measurement gap; and the network device transmits the configuration information of the first measurement gap to a terminal device, the configuration information of the first measurement gap being used for the terminal device to perform a measurement. Embodiments of the present disclosure provide an enhanced measurement gap configuration scheme, including a measurement gap configuration scheme based on carrier/frequency range, or carrier combination/frequency range combination, and a measurement gap configuration scheme that the network device performs grouping based on carrier combination/frequency range combination or reference signals with the same time or space characteristics, thereby avoiding the longer interrupt influence caused by the handover/switching of the radio frequency (RF) chain of the terminal device and improving the transmission performance of the network device and the terminal device.

### BRIEF DESCRIPTION OF THE DRAWINGS

FIG. 1 is a system architecture diagram of a communication system to which the embodiment of the present disclosure is applied.
FIG. 2 is a schematic diagram of an embodiment of a method for configuring a measurement gap in embodiments of the present disclosure.
FIG. 3 is a schematic diagram of another embodiment of a method for configuring a measurement gap in embodiments of the present disclosure.
FIG. 4 is a schematic diagram of another embodiment of a method for configuring a measurement gap in embodiments of the present disclosure.
FIG. 5 is a schematic diagram of another embodiment of a method for configuring a measurement gap in embodiments of the present disclosure.
FIG. 6 is a schematic diagram of an embodiment of a network device in embodiments of the present disclosure.
FIG. 7 is a schematic diagram of an embodiment of a terminal device in embodiments of the present disclosure.
FIG. 8 is a schematic diagram of another embodiment of a network device in embodiments of the present disclosure.
FIG. 9 is a schematic diagram of another embodiment of a terminal device in embodiments of the present disclosure.

### DETAILED DESCRIPTION

The technical solution of the embodiments of the present disclosure will be described below in conjunction with the drawings in the embodiments of the present disclosure, and it will be obvious that the described embodiments are only part of the embodiments of the present disclosure, but not all of them. Based on the embodiments in the present disclosure, all other embodiments obtained by those skilled in the art without making creative efforts fall within the scope of protection of the present disclosure.

The following is a brief description of some techniques involved in embodiments of the present disclosure.

### 1. Measurement gap (MG)

In order for the user equipment (UE) to better realize the mobility handover, the network device can configure for UE to measure the reference signal receiving power (RSRP), the reference signal received quality (RSRQ) or the signal to interference plus noise ratio (SINR) of the intra-frequency, inter-frequency or different network target adjacent areas in a specific time window, and the specific time window is the measurement gap.

In NR Rel-15, the operating frequency range of terminal device is not only below 6GHz, but also millimeter wave frequency range above 6GHz. Therefore, depending on whether the terminal device has a capability to support the FR1/FR2, radio access network 4 (RAN4) defines measurement gap of UE type (per UE) and FR type (per FR), i.e. gapFRl, gapFR2 and gapUE. At the same time, UE also introduces a capability indication of independent gap (independent Gap Config) to indicate whether the measurement gap of FR1/FR2 type (per FR1/FR2) can be configured.

(1) GapFR1: the measurement gap configuration applies only to FR1. GapFR1 and gapUE are not supported to be configured simultaneously. In addition, in E-UTRA-NR dual connectivity (EN-DC) mode, gapFR1 does not support configuration by NR radio resource control (RRC), and only long term evolution (LTE) RRC can configure gapFR1. Here E-UTRA is the evolved-universal mobile telecommunications system (UMTS) terrestrial radio access.

(2) GapFR2: the measurement gap configuration applies only to FR2. GapFR2 and gapUE are not supported to be configured simultaneously.

(3) GapUE: the measurement gap configuration is applicable to all frequency ranges, including FR1 and FR2. In EN-DC mode, the gapUE can be configured only by LTE RRC, but cannot be configured by NR RRC. If gapUE, gapFR1, or gapFR2 are configured, the configuration cannot be performed again.

If the UE supports the capability of independent gap, that is, the measurements of FR1 and FR2 can be independent and unaffected, the UE can configure the measurement gap of FR type (per FR). As shown in Table 1, information about configuring a measurement gap is provided.

**Table 1**

| Gap parameter configuration | Optional value (ms) |
|---|---|
| Measurement gap length (MGL) | 1.5, 3, 3.5, 4, 5.5, 6 |
| Measurement gap retransmission period, (MGRP) | 20, 40, 80, 16 |
| Measurement gap timing advance,(MGTA) | 0, 0.25, 0.5 |
| gap offset | 0-159 |
| Note: the maximum value of the gap offset cannot exceed the configured MGRP | |

There are 24 gap patterns supported in the current protocol, as shown in Table 2 below:

**Table 2**

| Gap Pattern Id | MGL(ms) | MGRP(ms) |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |

### 2. Measurement configuration (MeasConfig)

The MeasConfig includes the measurement configuration of intra-frequency measurement, inter-frequency measurement and inter-radio access technology (inter-RAT), and the configuration of the measurement gap.

The network applies the procedure as follows:
- to ensure that, whenever the UE has a measConfig associated with a cell group (CG), it includes a measurement object (measObject or MO) for the special cell (SpCell) and for each NR secondary cell (SCell) of the CG to be measured; here SpCell is primary cell (PCell) plus primary secondary cell (PSCell);
- to configure at most one measurement identity across all CGs using a reporting configuration with the report type (reportType) set to report cell global identity (reportCGI);
- when the UE is in NE-DC,NR-DC, or NR-standalone, to configure at most one measurement identity across all CGs using a reporting configuration with the reportType set to reportSFTD.

Here NE-DC is NR-E-UTRA dual connectivity, NR-DC is NR-dual connectivity; and SFTD is space frequency transmit diversity.

For the specific configuration of Measgap and MeasObject NR in RRC signaling, that is, MO addition and gap configuration, please refer to the specific measconfig IE in 3GPP protocol TS38331, which will not be repeated here.

### 3. Timing: maximum receive timing difference (MRTD)

A UE shall be capable of handling a relative receive timing difference between subframe timing boundary of a E-UTRA cell belonging to the master cell group (MCG) and the closest slot timing boundary of a cell belonging to secondary cell group (SCG) to be aggregated for EN-DC operation.

A UE shall be capable of handling a relative receive timing difference between subframe timing boundary of a E-UTRA cell belonging to the SCG to be aggregated for NE-DC operation and the closest slot timing boundary of a cell belonging to MCG.

A UE shall be capable of handling a relative receive timing difference between slot timing boundary of a cell belonging to MCG and the closest slot timing boundary of a cell belonging to the SCG to be aggregated for NR DC operation. A UE shall be capable of handling a relative receive timing difference among the closest slot timing boundaries of different carriers to be aggregated in NR carrier aggregation.

The maximum receive timing difference is described separately in the following cases.
(1) For E-UTRA frequency division duplex (FDD)-NR FDD intra-band EN-DC: UE indicates that it is capable of asynchronous EN-DC operation. EN-DC is E-UTRA-NR dual connectivity.

Maximum receive timing difference requirement for asynchronous EN-DC is shown in Table 3 below.

**Table 3**

| Sub-carrier spacing of E-UTRA cell in MCG) (kHz) | Downlink (DL) Sub-carrier spacing of cell in SCG) (kHz) (Note 1) | Maximum receive timing difference (µs) |
|---|---|---|
| 15 | 15 | 500 |
| 15 | 30 | 250 |
| 15 | 60 | 125 |
| 15 | 120Note2 | 62.5 |

(2) For E-UTRA FDD-NR FDD and E-UTRA time division duplex (TDD)-NR TDD intra-band EN-DC: UE does not indicate that it is capable of asynchronous FDD-FDD EN-DC operation.

Maximum receive timing difference requirement for intra-band synchronous EN-DC is illustrated in Table 4 below.

**Table 4**

| Sub-carrier spacing of E-UTRA cell in MCG (kHz) | DL Sub-carrier spacing of cell in SCG (kHz) Note1 | Maximum receive timing difference (µs) |
|---|---|---|
| 15 | 15 | 3 |
| 15 | 30 | 3 |
| 15 | 60 | 3 |

### (3) For inter-band synchronous EN-DC

Maximum receive timing difference requirement for inter-band synchronous EN-DC is illustrated in Table 5 below.

**Table 5**

| Sub-carrier spacing of E-UTRA cell in MCGPCell (kHz) | DL Sub-carrier spacing of cell in SCG (kHz) (Note1) | Maximum receive timing difference (µs) |
|---|---|---|
| 15 | 15 | |
| 15 | 30 | |
| 15 | 60 | 33 |
| 15 | 120 | |

### (4) For intra-band non-contiguous NR carrier aggregation

Maximum receive timing difference requirement for intra-band non-contiguous NR carrier aggregation is illustrated in Table 6 below.

**Table 6**

| Frequency range | Maximum receive timing difference (µs) |
|---|---|
| FR1 | 31 |
| FR2 | 0.26 |

### (5) For inter-band NR carrier aggregation

Maximum receive timing difference requirement for inter-band NR carrier aggregation is illustrated in Table 7 below.

**Table 7**

| Frequency range of the pair of carriers | Maximum receive timing difference (µs) |
|---|---|
| FR1 | 33 |
| FR2 | 8 |
| Between FR1 and FR2 | 25 |

### (6) For minimum requirements for inter-band NE-DC

Maximum receive timing difference requirement for asynchronous NE-DC is illustrated in Table 8 below.

**Table 8**

| Sub-carrier spacing of cell in MCG (kHz) | DL sub-carrier spacing of EUTRA cell in SCG (kHz) (Note 1) | Maximum receive timing difference (µs) |
|---|---|---|
| 15 | 15 | 500 |
| 30 | 15 | 250 |
| 60 | 15 | 125 |
| 120 | 15 | 62.5 |

### (7) For inter-band synchronous NE-DC

Maximum receive timing difference requirement for inter-band synchronous NE-DC is illustrated in Table 9 below.

**Table 9**

| Sub-carrier spacing of cell in MCG (kHz) | DL sub-carrier spacing of EUTRA cell in SCG (kHz) (Note 1) | Maximum receive timing difference (µs) |
|---|---|---|
| 15 | 15 | 33 |
| 30 | 15 | |
| 60 | 15 | |
| 120 | 15 | |

(8) For inter-band NR DC provided that the UE indicates that it is capable of synchronous NR DC only

Maximum receive timing difference requirement for inter-band synchronous NR-DC is illustrated in Table 10 below.

**Table 10**

| Frequency range | | Maximum receive timing difference (µs) |
|---|---|---|
| Cell in MCG | Cell in SCG | |
| FR1 | FR1 | 33 |
| FR2 | FR2 | 8 |
| FR1 | FR2 | 33 |

### (9) For inter-band synchronous NR-DC.

Maximum receive timing difference requirement for inter-band asynchronous NR-DC is illustrated in Table 11 below.

**Table 11**

| Max{ Sub-carrier spacing in PCell (kHz), Sub-carrier spacing in PSCell (kHz)} | Maximum receive timing difference (µs) |
|---|---|
| 15 | 500 |
| 30 | 250 |
| 60 | 125 |
| 120 | 62.5 |

In LTE R14, per component carrier (CC) MG configuration was introduced to address the ability of CA-capable UEs not in CA mode that can use spare RF chains for MG-based measurement. Currently in NR, it is not possible to configure per-CC MG and all active CCs experience a blackout period. In contrast, it is possible to configure MG for a subset of CCs. The advantages of per-CC MG configuration (i.e., better user experience, improved throughput, and increased system capacity) carry over to NR regardless of legacy or new MG patterns and are of high value to both network (NW) and UE.

### (1) Per-CC MG configuration [RAN4, RAN2]

a. Radio resource management (RRM) requirements for per CC MG configuration [RAN4].
   i. Interruption requirements on CCs configured with MG and CCs not configured with MG;
   ii. Measurement requirements for CCs configured with MG.
b. Specification of applicability of per-CC MG configuration [RAN4].
c. Signaling design of per-CC MG configuration and design of capability signaling [RAN2].

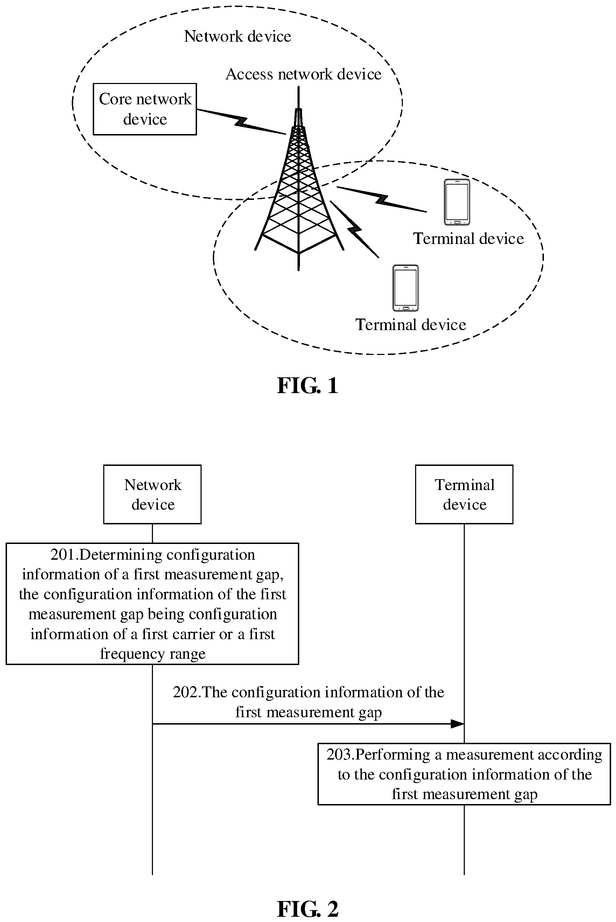

FIG. 1 is a system architecture diagram of a communication system to which the embodiments of the present disclosure is applied. The communication system may include a network device, which may be a device that communicates with a terminal device (or referred to as a communication terminal or terminal). The network device may provide communication coverage for a particular geographic area and may communicate with terminal devices located within the coverage area. FIG. 2 exemplarily illustrates a network device and two terminal devices. Alternatively, the communication system may include multiple network devices and other numbers of terminal devices may be included within the coverage of each network device, which is not limited by embodiments of the present disclosure. Alternatively, the communication system may also include other network entities such as network controllers, mobility management entities and the like, which are not limited by embodiments of the present disclosure.

The embodiments of the present disclosure are described in connection with a network device and a terminal device. The terminal device may refer to user equipment (UE), an access terminal, a subscriber unit, a subscriber station, a mobile station, a remote platform, a remote station, a remote terminal, a mobile device, a user terminal, a terminal, a wireless communication device, a user agent, or a user device.

The terminal device may be a station (ST) in the WLAN, it may be a cellular phone, a cordless phone, a session initiation protocol (SIP) telephone, wireless local loop (WLL) station, a personal digital assistant (PDA) device, a handheld device with wireless communication function, a computing device or other processing device connected to wireless modem, an in-vehicle device, a wearable device, a next-generation communication system such as a terminal device in an NR network, or the terminal device in the future evolved public land mobile network (PLMN) network, etc.

In embodiments of the present disclosure, the terminal device can be deployed on land, including indoor or outdoor, hand-held, wearable or vehicle-mounted. It can also be deployed on the water (such as ships, etc.). It can also be deployed on airplanes, balloons and satellites, etc.

In embodiments of the present disclosure, the terminal device can be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

By way of example and not limitation, in embodiments of the present disclosure, the terminal device may also be a wearable device. A wearable device can also be called wearable intelligent device, which is the general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. Generalized wearable smart devices include full functions and large size, which can realize complete or partial functions without relying on smart phones, such as smart watches or smart glasses, and only focus on certain application functions, which need to be used in conjunction with other devices such as smart phones, such as various smart bracelets and smart jewelry for monitoring physical signs.

The network device can also include access network device and core network device. That is, the wireless communication system also includes a plurality of core networks for communicating with access network devices. The access network device may be an evolutionary node B (eNB or e-NodeB), macro base station, a micro base station (also referred to as a "small base station"), a pico base station, an access point (AP), a transmission point (TP) or a new generation Node B (gNodeB) in a long-term evolution (LTE) system, a next radio (mobile communication system) (NR) system or an authorized auxiliary access long-term evolution (LAA) system.

In embodiments of the present disclosure, the network device may be a device for communicating with a mobile device, the network device can be an access point (AP) in WLAN, a base transceiver station (BTS) in GSM or CDMA, a base station (NodeB, NB) in WCDMA, an evolutional node B (eNB or eNodeB) in LTE, a relay station or an access point, or an in-vehicle device, a wearable device, a network device in NR network (gNB), a network device in future evolved PLMN network or a network device in NTN network, etc.

By way of example and not limitation, in embodiments of the present disclosure, the network device may have mobility characteristics, for example, the network device may be a mobile device. Alternatively, the network device can be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Alternatively, the network device can also be a base station arranged on land, water and the like.

In embodiments of that present disclosure, the network device can provide services for a cell, the terminal device communicates with the network device through transmission resources (e.g. frequency domain resources, or spectrum resources) used by the cell, the cell may be a cell corresponding to a network device (e.g. a base station), the cell can belong to macro base station or the base station corresponding to small cell. The small cell can include metro cell, micro cell, pico cell, femto cell, etc. These small cells have the characteristics of small coverage and low transmission power, and are suitable for providing high-speed data transmission services.

It should be understood that a device having a communication function in a network/system in embodiments of the present disclosure may be referred to as a communication device. Taking the communication system illustrated in FIG. 2 as an example, the communication device may include a network device and a terminal device having a communication function, the network device and the terminal device may be specific devices described in the embodiments of the present disclosure and will not be described here. The communication device may also include other devices in the communication system such as network controllers, mobility management entities and other network entities, which are not limited in embodiments of the present disclosure.

The technical solution of the embodiments of the present disclosure can be applied to various communication systems. For example, global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area network (WLAN), wireless fidelity (WiFi), 5th-generation communication system or other communication systems.

Generally speaking, conventional communication systems support a limited number of connections and are easy to implement. However, with the development of communication technology, mobile communication systems will not only support conventional communication, but also support, for example, device to device (D2D) communication, machine to machine (M2M) communication, machine type communication (MTC), vehicle to vehicle (V2V) communication, vehicle to everything (V2X), etc. Embodiments of the present disclosure can also be applied to these communication systems.

The communication system in the embodiments of the present disclosure can be applied to a carrier aggregation (CA) scenario, a dual connectivity (DC) scenario, and a standalone (SA) network distribution scenario.

In embodiments of the present disclosure, there is provided an enhanced MG configuration scheme, including a MG configuration based on carrier/frequency range, or carrier combination/frequency range combination, and a MG configuration scheme in which network device performs grouping based on carrier/frequency range combination or reference signals (such as MRTD or QCL TypeD relationship) with the same time or space characteristics. Therefore, the longer interrupt influence caused by the handover/switching of the RF chain of the UE is avoided, and the transmission performance of the network device and the terminal device is improved.

The technical solution of the present disclosure will be further explained in the form of embodiments below. FIG. 2 is a schematic diagram of an embodiment of a method for configuring a measurement gap in embodiments of the present disclosure, and the method includes the following operations.

At 201, a network device determines configuration information of a first measurement gap, the configuration information of the first measurement gap being configuration information of a first carrier or a first frequency range.

Alternatively, the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range. Alternatively, the number of measurement gap pattern in the first measurement gap is one.

Alternatively, the configuration information of the first measurement gap is configuration information of a measurement reference signal on the first carrier, and different measurement reference signals correspond to different measurement gap patterns in the first measurement gap. Alternatively, the first measurement gap includes one or more measurement gap patterns. It can be appreciated that the number of measurement gap patterns in the first measurement gap is one or more.

Alternatively, the terminal device reports first indication information to the network device, the first indication information indicates that the terminal device has a first measurement indication capability, and the first indication information is used for the network device to determine the configuration information of the first measurement gap.

Alternatively, the first measurement indication capability includes at least one of a positioning measurement, a high-speed rail mobility measurement, or a low power consumption measurement of an Internet of Things device. It will be appreciated that the first measurement indication capability may also be referred to as the special measurement indication capability.

Alternatively, the positioning measurement may include Rx-Tx time difference, reference signal time difference (RSTD), or positioning reference signal-reference signal receiving power (PRS-RSRP).

As an example, a network device configures "Need for gap" information measured on a frequency band or carrier:
(1) for the intra-frequency frequency points or inter-frequency frequency points configured per carrier, the corresponding gap configuration information can keep a group of the same parameter configurations, at least including MGL, MGRP and gap pattern ID; or
(2) for the intra-frequency frequency points or inter-frequency frequency points configured per band, the corresponding gap configuration can keep a group of the same parameter configurations, at least including MGL, MGRP and gap pattern ID; or
(3) for the UE with the first measurement indication capability (for example, UE supports positioning measurement and UE supports XX measurement on band N), a new gap pattern is introduced, and its parameters are different from the existing 24 gap patterns. For example, the new gap pattern may include a longer MGL or a longer MGRP.

At 202, the network device transmits the configuration information of the first measurement gap to a terminal device, the configuration information of the first measurement gap being used for the terminal device to perform a measurement.

The terminal device receives the configuration information of the first measurement gap from the network device.

At 203, the terminal device performs a measurement according to the configuration information of the first measurement gap.

Alternatively, the terminal device determines the first measurement gap according to the configuration information of the first measurement gap, and performs a measurement according to the first measurement gap.

In the embodiment of the present disclosure, an MG configuration for a UE with a first measurement indication capability is introduced to better coordinate the MG of respective carriers/frequency ranges. Moreover, the measurement of different frequency points within the carrier/frequency range can avoid the longer interrupt effect caused by handover/switching of UE RF chain. The MG (either an existing gap pattern or a new gap pattern) can be configured for carrier/frequency range for better transmission performance of the network and terminal (e.g. better user experience, improved throughput, increased system capacity).

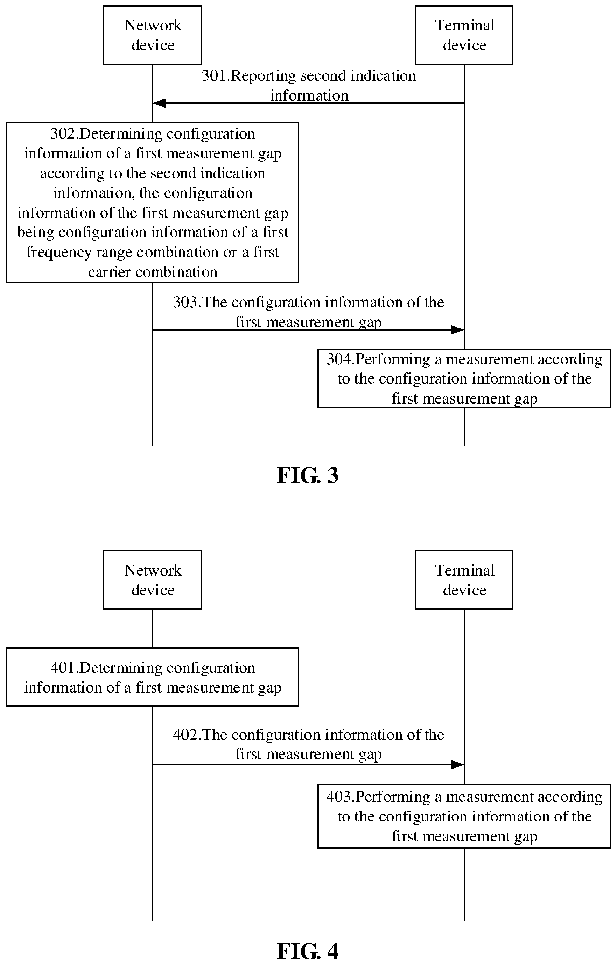

FIG. 3 is a schematic diagram of another embodiment of a method for configuring a measurement gap in embodiments of the present disclosure, and the method includes the following operations.

At 301, the network device receives second indication information reported by the terminal device.

The second indication information is used for the network device to determine configuration information of the first measurement gap.

Alternatively, the second indication information indicates that the terminal device has or does not have the capability to support frequency range combination or carrier combination. Exemplarily, the UE reports that the UE has or does not have the capability to support measurement gap of frequency range combination or carrier combination.

At 302, the network device determines configuration information of a first measurement gap according to the second indication information, the configuration information of the first measurement gap being configuration information of a first frequency range combination or a first carrier combination.

Alternatively, the first measurement gap includes one or more measurement gap patterns.

The network device determines the configuration information of the first measurement gap according to the second indication information, which may include but is not limited to the following implementations.
(1) In response to that the second indication information indicates that the terminal device has a capability to support frequency range combination or carrier combination, the network device determines the configuration information of the first measurement gap according to the second indication information. The configuration information of the first measurement gap is configuration information of a first frequency range combination or a first carrier combination, or the configuration information of the first measurement gap is configuration information of a terminal device type (per UE) or a frequency range type (per FR).
(2) In response to that the second indication information indicates that the terminal device does not have the capability to support frequency range combination or carrier combination, the network device determines the configuration information of the first measurement gap according to the second indication information, the configuration information of the first measurement gap being the configuration information of the terminal device type or the frequency range type.

Alternatively, the first carrier combination is a combination of carriers on a same frequency range (also referred to as an intra-band CA) or a combination of carriers on different frequency ranges (also referred to as an inter-band CA).

Alternatively, a number of the frequency range combination is one or more, or a number of the carrier combination is one or more.

Alternatively, the configuration information of the first measurement gap is configuration information of all carriers on different frequency ranges in the first frequency range combination.

Alternatively, the configuration information of the first measurement gap is configuration information of different carriers in the first carrier combination.

Alternatively, the configuration information of the first measurement gap is configuration information of measurement reference signals of different carriers in the first carrier combination, and different measurement reference signals correspond to different measurement gap patterns in the first measurement gap.

Exemplarily, according to that the UE has or does not have a capability to support the frequency range combination/carrier combination reported by the terminal device, for the UE that does not have the capability, the network device may configure the measurement gap according to the existing measurement gap of UE type (per UE) or FR type (per FR); for the UE that has the capability, the network device can configure the measurement gap per band combination, or configure the measurement gap according to the the existing gap per UE or per FR. It can be understood that the MG may be an existing MG or an MG that includes a longer MGRP.

Exemplarily, the network device may configure one or more MGs for the same band combination or the same carrier combination. The network device may also configure different MGs for different band combinations or different carrier combinations.

At 303, the network device transmits the configuration information of the first measurement gap to the terminal device, the configuration information of the first measurement gap being used for the terminal device to perform a measurement.

The terminal device receives the configuration information of the first measurement gap from the network device.

At 304, the terminal device performs a measurement according to the configuration information of the first measurement gap.

Alternatively, the terminal device determines the first measurement gap according to the configuration information of the first measurement gap, and performs a measurement according to the first measurement gap.

Exemplarily, in response to that the terminal device has the capability to support the frequency range combination/carrier combination and the network device has configured a measurement gap of the frequency range combination/carrier combination, the terminal device may simultaneously perform measurements according to at least one measurement gap at the measurement frequency points configured on each frequency range combination/carrier combination.

In the embodiment of the present disclosure, an MG configuration based on frequency range combination or carrier combination is introduced, and the design that each frequency range combination or carrier combination shares RF chain is utilized to better coordinate MG between carriers, avoid longer interruption influence caused by the handover/switching of UE RF chain, and obtain better transmission performance of the network and terminal.

FIG. 4 is a schematic diagram of an embodiment of a method for configuring a measurement gap in embodiments of the present disclosure, and the method includes the following operations.

At 401, the network device determines configuration information of a first measurement gap.

Alternatively, the first measurement gap includes one or more measurement gap patterns.

Alternatively, the configuration information of the first measurement gap is configuration information of a carrier combination with a same maximum receive timing difference (MRTD).

Alternatively, the configuration information of the first measurement gap is configuration information with a same MRTD in an intra-band frequency range combination.

Alternatively, the configuration information of the first measurement gap is configuration information with the same MRTD in an inter-band frequency range combination.

Alternatively, the first measurement gap includes a plurality of measurement gap patterns with a same offset or different offsets. That is, when the number of measurement gap patterns of the first measurement gap is more, the offsets in different measurement gap patterns are the same or different.

Exemplarily, based on the sub-carrier spacing (SCS) of each carrier in the band of the asynchronous or synchronous DC or CA combination in the related art, at least one group of SCS combinations is supported, which corresponds to one group of downlink MRTD. In the embodiment of the present disclosure, the carrier combination of the same MRTD corresponds to the same group of MG, and the configured offset may be the same or different. For an intra-band CA, carrier combination with the same MRTD corresponds to the same group of MG, herein at least offset in the MG of each carrier configuration may be the same. For an inter-band CA, the carrier combination with the same MRTD corresponds to the same group of MG, herein at least offset in the MG of each carrier configuration may be the same.

At 402, the network device transmits the configuration information of the first measurement gap to a terminal device, the configuration information of the first measurement gap being used for the terminal device to perform a measurement.

The terminal device receives the configuration information of the first measurement gap from the network device.

At 403, the terminal device performs a measurement according to the configuration information of the first measurement gap.

Alternatively, the terminal device determines the first measurement gap according to the configuration information of the first measurement gap, and performs a measurement according to the first measurement gap.

It should be noted that the embodiment illustrated in FIG. 4 can be combined with the embodiment illustrated in FIG. 3, and the combined scheme is also within the scope of protection of the present disclosure.

In the embodiment of the present disclosure, the MG can be configured based on time synchronization characteristic between carriers to achieve better transmission performance of the network and terminal (e.g. better user experience, improved throughput and increased system capacity).

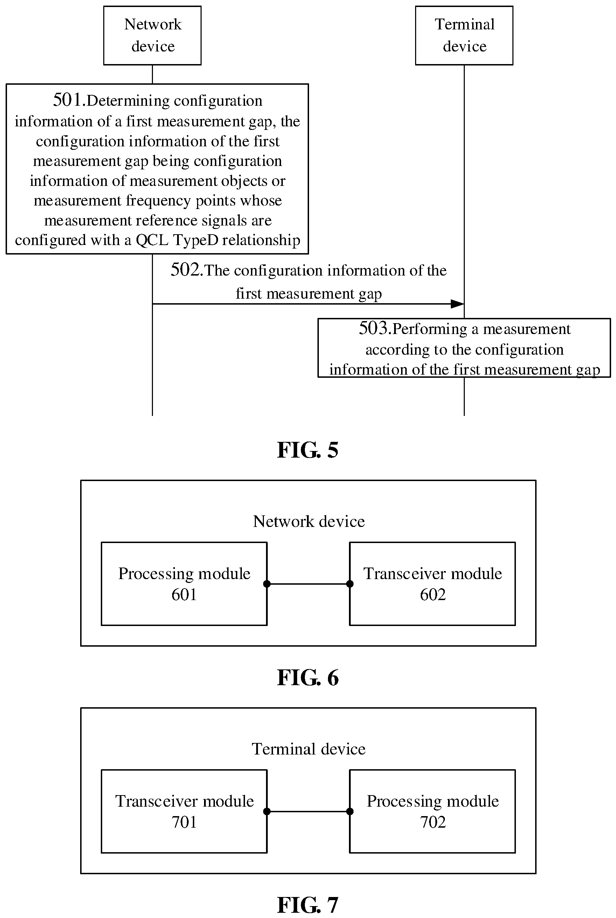

FIG. 5 is a schematic diagram of an embodiment of a method for configuring a measurement gap in embodiments of the present disclosure, and the method includes the following operations.

At 501, a network device determines configuration information of a first measurement gap, the configuration information of the first measurement gap being configuration information of measurement objects or measurement frequency points whose measurement reference signals are configured with a quasi-co-location (QCL) TypeD relationship.

Exemplarily, the network device configures the same group of MG for the measurement objects or measurement frequency points whose measurement reference signals are configured with the same QCL TypeD relationship.

Alternatively, the configuration information of the first measurement gap is configuration information of measurement objects or measurement frequency points of measurement reference signals associated with a same synchronization signal block.

Alternatively, the configuration information of the first measurement gap is configuration information of measurement objects or measurement frequency points whose measurement reference signals are associated with the same synchronization signal block (SSB) and configured with a QCL TypeD relationship.

Exemplarily, for a group of CSI-RS measurements associated with the same SSB, the network device may configure the same group of MG for the CSI-RS measurement objects or measurement frequency points configured with the same QCL TypeD relationship.

Alternatively, the first measurement gap includes one or more measurement gap patterns.

Alternatively, the measurement reference signal may include, but is not limited to, an SSB, a channel state information reference signal (CSI), or a positioning reference signal (PRS).

Alternatively, the SSB includes at least one of a master synchronization signal, a secondary synchronization signal, and a physical broadcast channel.

Alternatively, the master synchronization signal includes a sidelink master synchronization signal. The secondary synchronization signal includes a sidelink secondary synchronization signal. The physical broadcast channel includes a physical sidelink broadcast channel.

At 502, the network device transmits the configuration information of the first measurement gap to a terminal device, the configuration information of the first measurement gap being used for the terminal device to perform a measurement.

The terminal device receives the configuration information of the first measurement gap from the network device.

At 503, the terminal device performs the measurement according to the configuration information of the first measurement gap.

Alternatively, the terminal device determines the first measurement gap according to the configuration information of the first measurement gap, and performs a measurement according to the first measurement gap.

It should be noted that the embodiment illustrated in FIG. 5 can be combined with the embodiment illustrated in FIG. 2, FIG. 3 or FIG. 4, and the combined scheme is also within the scope of protection of the present disclosure.

In the related art, for CSI-RS measurements, measurement requirements are defined at Rel-16 only for CSI-RS measurements associated with an associated SSB. However, in the embodiment of the present disclosure, the same group of MG is configured for the measurement objects or the measurement frequency points whose measurement reference signals are configured with the QCL Type D (the same measurement direction) relationship, so as to avoid the longer time delay or interruption influence caused by frequent antenna direction handover, thereby obtaining better transmission performance of the network and terminal.

FIG. 6 is a schematic diagram of an embodiment of a network device in embodiments of the present disclosure, and the network device includes a processing module 601 and a transceiver module 602.

The processing module 601 is configured to determine configuration information of a first measurement gap.

The transceiver module 602 is configured to transmit the configuration information of the first measurement gap to a terminal device, the configuration information of the first measurement gap being used for the terminal device to perform a measurement.

It should be noted that the network device illustrated in FIG. 6 can correspondingly implement the contents of any of the embodiments illustrated in FIG. 2 to FIG. 5.

FIG. 7 is a schematic diagram of an embodiment of a terminal device in embodiments of the present disclosure, and the network device includes a transceiver module 701 and a processing module 702.

The transceiver module 701 is configured to receive configuration information of a first measurement gap from a network device.

The processing module 702 is configured to perform a measurement according to the configuration information of the first measurement gap.

It should be noted that the terminal device illustrated in FIG. 7 can correspondingly implement the contents of any of the embodiments illustrated in FIG. 2 to FIG. 5.

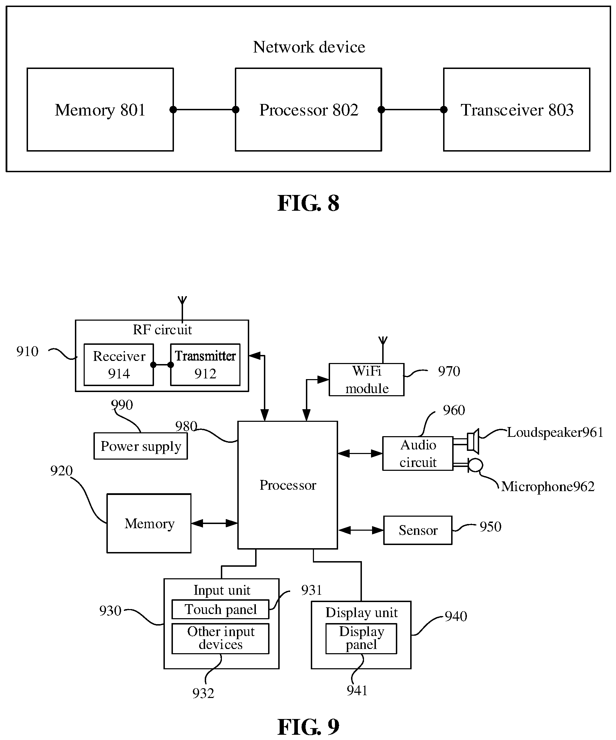

FIG. 8 is a schematic diagram of another embodiment of a network device in embodiments of the present disclosure, and the network device includes:
a memory 801 storing executable program codes; and
a processor 802 and a transceiver 803, that are coupled to the memory.

The processor 802 is configured to determine configuration information of a first measurement gap.

The transceiver 803 is configured to transmit the configuration information of the first measurement gap to a terminal device, the configuration information of the first measurement gap being used for the terminal device to perform a measurement.

Alternatively, the first measurement gap includes one or more measurement gap patterns.

Alternatively, the configuration information of the first measurement gap is configuration information of a first carrier or a first frequency range.

Alternatively, the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

Alternatively, the configuration information of the first measurement gap is configuration information of a measurement reference signal on the first carrier, and different measurement reference signals correspond to different measurement gap patterns in the first measurement gap.

Alternatively, the transceiver 803 is further configured to receive first indication information reported by the terminal device, and the first indication information indicates that the terminal device has a first measurement indication capability; and
the processor 802 is specifically configured to determine the configuration information of the first measurement gap according to the first indication information.

Alternatively, the first measurement indication capability includes at least one of a positioning measurement, a high-speed rail mobility measurement, or a low power consumption measurement of an Internet of Things device.

Alternatively, the transceiver 803 is further configured to receive second indication information reported by the terminal device; and
the processor 802 is specifically configured to in response to that the second indication information indicates that the terminal device has a capability to support frequency range combination or carrier combination, determine the configuration information of the first measurement gap according to the second indication information, the configuration information of the first measurement gap being configuration information of a first frequency range combination or a first carrier combination, or the configuration information of the first measurement gap being configuration information of a terminal device type or a frequency range type.

Alternatively, the first carrier combination is a combination of carriers on a same frequency range or a combination of carriers on different frequency ranges.

Alternatively, a number of the frequency range combination is one or more, or a number of the carrier combination is one or more.

Alternatively, the configuration information of the first measurement gap is configuration information of all carriers on different frequency ranges in the first frequency range combination.

Alternatively, the configuration information of the first measurement gap is configuration information of different carriers in the first carrier combination.

Alternatively, the configuration information of the first measurement gap is configuration information of measurement reference signals of different carriers in the first carrier combination, and different measurement reference signals correspond to different measurement gap patterns in the first measurement gap.

Alternatively, the processor 802 is specifically configured to: in response to that the second indication information indicates that the terminal device does not have the capability to support frequency range combination or carrier combination, determine the configuration information of the first measurement gap according to the second indication information, the configuration information of the first measurement gap being the configuration information of the terminal device type or the frequency range type.

Alternatively, the configuration information of the first measurement gap is configuration information of a carrier combination with a same maximum receive timing difference (MRTD).

Alternatively, the configuration information of the first measurement gap is configuration information with a same MRTD in an intra-band frequency range combination or configuration information with the same MRTD in an inter-band frequency range combination.

Alternatively, the first measurement gap includes a plurality of measurement gap patterns with a same offset or different offsets.

Alternatively, the configuration information of the first measurement gap is configuration information of measurement objects or measurement frequency points whose measurement reference signals are configured with a quasi-co-location (QCL) TypeD relationship.

Alternatively, the configuration information of the first measurement gap is configuration information of measurement objects or measurement frequency points of measurement reference signals associated with a same synchronization signal block.

Alternatively, the configuration information of the first measurement gap is configuration information of measurement objects or measurement frequency points whose measurement reference signals are associated with the same synchronization signal block and configured with a QCL TypeD relationship.

FIG. 9 is a schematic diagram of another embodiment of a terminal device in embodiments of the present disclosure, and the terminal device includes:
a radio frequency (RF) circuit 910, a memory 920, an input unit 930, a display unit 940, a sensor 950, an audio circuit 960, and a wireless fidelity (WiFi) module 970, a processor 980, and a power supply 990 when taking the terminal device as a mobile phone as an example. The RF circuit 910 includes a receiver 914 and a transmitter 912. Those skilled in the art will appreciate that the structure of the mobile phone illustrated in FIG. 9 does not constitute a limitation on the mobile phone and may include more or fewer parts than illustrated, or a combination of parts, or a different arrangement of parts.

The following is a detailed introduction to each component of the mobile phone with reference to FIG. 9.

The RF circuit 910 can be used for receiving and transmitting signals during sending and receiving information or talking. Specifically, the RF circuit 910 receives downlink information of the base station and then transmits it to the processor 980 to process. In addition, the RF circuit 910 transmits the designed uplink data to the base station. Generally, the RF circuit 910 includes but is not limited to antennas, at least one amplifier, transceivers, couplers, low noise amplifiers (LNA), duplexer, etc. In addition, the RF circuit 910 may also communicate with a network and other devices through wireless communication. The wireless communication may use any communication standard or protocol, including but not limited to the global system of mobile communication (GSM), general packet radio service (GPRS), code division multiple access (CDMA), wideband code division multiple access (WCDMA), long term evolution (LTE), E-mail, short messaging service (SMS), etc.

The memory 920 may be used to store software programs and modules, and the processor 980 implements various functional applications and data processing of the mobile phone by running the software programs and modules stored in the memory 920. The memory 920 may mainly include a storage program area and a storage data area. The storage program area may store an operating system, an application program required for at least one function (such as a sound playback function, an image playback function or the like) and the like. The storage data area may store data (such as audio data, phone book, etc.) created according to the use of the mobile phone. Additionally, the memory 920 may include high-speed random access memory and may also include non-volatile memory, such as at least one disk storage device, flash memory device or other volatile solid-state storage device.

The input unit 930 is used to receive inputted numeric or character information and to generate key signal input related to user settings and function control of the mobile phone. Specifically, the input unit 930 may include a touch panel 931 and other input devices 932. The touch panel 931, also referred to as a touch screen, may collect touch operations on or near the touch panel 931 by a user (such as operations on or near the touch panel 931 by a user using any suitable object or accessory such as a finger, stylus, etc.) and drive corresponding connection devices according to a preset program. Alternatively, the touch panel 931 may include two parts of a touch detection device and a touch controller. The touch detection device detects the touch orientation of the user, detects the signal brought by the touch operation, and transmits the signal to the touch controller. The touch controller receives touch information from the touch detection device, converts it into contact coordinates, sends it to the processor 980, and can receive and execute commands from the processor 980. In addition, the touch panel 931 may be implemented in various types such as resistive, capacitive, infrared and surface acoustic waves. The input unit 930 may include other input devices 932 in addition to the touch panel 931. Specifically, other input devices 932 may include but are not limited to one or more of a physical keyboard, function keys (such as volume control keys, switch keys etc.), trackball, mouse, joystick, etc.

The display unit 940 may be used to display information input by or provided to the user and various menus of the mobile phone. The display unit 940 may include a display panel 941, which may optionally be configured in the form of a liquid crystal display (LCD), an organic light-emitting diode (OLED) or the like. Further, the touch panel 931 may overlay the display panel 941, and when the touch panel 931 detects a touch operation on or near it, the touch operation is transmitted to the processor 980 to determine a type of touch event, and then the processor 980 provides a corresponding visual output on the display panel 941 according to the type of touch event. Although in FIG. 9, the touch panel 931 and the display panel 941 are two independent components to implement the input and output functions of the mobile phone, but in some embodiments, the touch panel 931 and the display panel 941 may be integrated to implement the input and output functions of the mobile phone.

The mobile phone may also include at least one sensor 950, such as a light sensor, a motion sensor and other sensors. Specifically, the light sensor may include an ambient light sensor that can adjust the brightness of the display panel 941 according to the brightness of the ambient light and a proximity sensor that can turn off the display panel 941 and/or the backlight when the mobile phone moves to the ear. As a kind of motion sensor, the accelerometer sensor can detect the acceleration in all directions (usually three axes), and can detect the magnitude and direction of gravity when it is still. It can be used to the application of identifying mobile phone attitude (such as horizontal and vertical screen switching, related games, magnetometer attitude calibration), vibration recognition related functions (such as pedometer, knocking), etc. As for gyroscopes, barometers, hygrometers, thermometers, infrared sensors and other sensors that can be configured in mobile phones, they will not be repeated here.

The audio circuit 960, the loudspeaker 961 and the microphone 962 may provide an audio interface between the user and the mobile phone. The audio circuit 960 can transmit the received electrical signal converted by audio data to the loudspeaker 961, and the loudspeaker 961 converts it into a sound signal for output. On the other hand, the microphone 962 converts the collected sound signal into an electrical signal, which is received by the audio circuit 960 and converts into audio data, and then outputs the audio data to the processor 980 for processing, and then transmits the audio data to, for example, another mobile phone via the RF circuit 910, or outputs the audio data to the memory 920 for further processing.

WiFi is a short-distance wireless transmission technology. Mobile phones can help users send and receive e-mails, browse web pages and access streaming media through WiFi module 970, which provides users with wireless broadband internet access. Although the WiFi module 970 is illustrated in FIG. 9, it is understood that it is not an essential component of a mobile phone and may be omitted as necessary without changing the essence of the present disclosure.

The processor 980 is a control center of the mobile phone, the processor connects various parts of the whole mobile phone by various interfaces and lines, executes various functions of the mobile phone and processes data by running or executing software programs and/or modules stored in the memory 920, and calls data stored in the memory 920, thereby monitoring the mobile phone as a whole. Alternatively, the processor 980 may include one or more processing units. Preferably, the processor 980 may integrate an application processor and a modem processor. The application processor primarily handles operating systems, user interfaces, applications, and the like. The modem processor primarily handles wireless communications. It will be appreciated that the modem processor described above may also not be integrated into the processor 980.

The mobile phone also includes a power supply 990 (such as a battery) for supplying power to the various components. Preferably, the power supply may be logically connected to the processor 980 through a power management system, thereby realizing functions such as managing charging, discharging, and power consumption management through the power management system. Although not illustrated, the mobile phone may also include a camera, a Bluetooth module, etc., which will not be repeated here.

It should be noted that in the embodiment of the present disclosure, the radio frequency circuit 910 is configured to receive configuration information of a first measurement gap from a network device.

The processor 980 is configured to perform a measurement according to the configuration information of the first measurement gap.

Alternatively, the first measurement gap includes one or more measurement gap patterns.

Alternatively, the configuration information of the first measurement gap is configuration information of a first carrier or a first frequency range.

Alternatively, the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

Alternatively, the configuration information of the first measurement gap is configuration information of a measurement reference signal on the first carrier, and different measurement reference signals correspond to different measurement gap patterns in the first measurement gap.

Alternatively, the RF circuit 910 is further configured to report first indication information to the network device, the first indication information indicates that the terminal device has a first measurement indication capability, and the first indication information is used for the network device to determine the configuration information of the first measurement gap.

Alternatively, the first measurement indication capability includes at least one of a positioning measurement, a high-speed rail mobility measurement, or a low power consumption measurement of an Internet of Things device.

Alternatively, the RF circuit 910 is further configured to report second indication information to the network device, the second indication information being used for the network device to determine the configuration information of the first measurement gap; and in response to that the second indication information indicates that the terminal device has a capability to support frequency range combination or carrier combination, the configuration information of the first measurement gap being configuration information of a first frequency range combination or a first carrier combination, or the configuration information of the first measurement gap being configuration information of a terminal device type or a frequency range type.

Alternatively, the first carrier combination is a combination of carriers on a same frequency range or a combination of carriers on different frequency ranges.

Alternatively, a number of the frequency range combination is one or more, or a number of the carrier combination is one or more.

Alternatively, the configuration information of the first measurement gap is configuration information of all carriers on different frequency ranges in the first frequency range combination.

Alternatively, the configuration information of the first measurement gap is configuration information of different carriers in the first carrier combination.

Alternatively, the configuration information of the first measurement gap is configuration information of measurement reference signals of different carriers in the first carrier combination, and different measurement reference signals correspond to different measurement gap patterns in the first measurement gap.

Alternatively, the second indication information is used for the network device to determine the configuration information of the first measurement gap; and in response to that the second indication information indicates that the terminal device does not have the capability to support frequency range combination or carrier combination, the configuration information of the first measurement gap is the configuration information of the terminal device type or the frequency range type.

Alternatively, the configuration information of the first measurement gap is configuration information of a carrier combination with a same maximum receive timing difference (MRTD).

Alternatively, the configuration information of the first measurement gap is configuration information with a same MRTD in an intra-band frequency range combination or configuration information with the same MRTD in an inter-band frequency range combination.

Alternatively, the first measurement gap includes a plurality of measurement gap patterns with a same offset or different offsets.

Alternatively, the configuration information of the first measurement gap is configuration information of measurement objects or measurement frequency points whose measurement reference signals are configured with a quasi-co-location (QCL) TypeD relationship.

Alternatively, the configuration information of the first measurement gap is configuration information of measurement objects or measurement frequency points of measurement reference signals associated with a same synchronization signal block.

Alternatively, the configuration information of the first measurement gap is configuration information of measurement objects or measurement frequency points whose measurement reference signals are associated with the same synchronization signal block and configured with a QCL TypeD relationship.

In the above-described embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the flow or function described in accordance with embodiments of the present disclosure is generated in whole or in part. The computer may be a general purpose computer, a special purpose computer, a computer network, or other programmable device. The computer instructions may be stored in a computer-readable storage medium, or be transmitted from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium accessible to a computer or a data storage device containing one or more usable media integration, such as a server, data center, etc. The usable media may be magnetic media (e.g. floppy disk, hard disk, magnetic tape), optical media (e.g. DVD), or semiconductor media (e.g. solid state disk (SSD)), etc.

The terms "first", "second", "third", "fourth", etc. (if present) in the description and claims of the present disclosure and the above drawings are used to distinguish similar objects and need not be used to describe a particular order or priority. It should be understood that the data thus used can be interchanged where appropriate so that the embodiments described herein can be implemented in an order other than that illustrated or described herein. In addition, the terms "including" and "having" and any variations of them are intended to cover non-exclusive inclusion, for example, a process, method, system, product, or device that includes a series of steps or units does not need to be limited to those clearly listed, but may include other steps or units that are not clearly listed or inherent to such processes, methods, products, or devices.

## Claims

1. A method for configuring a measurement gap, comprising:
determining, by a network device, configuration information of a first measurement gap;
transmitting, by the network device, the configuration information of the first measurement gap to a terminal device, wherein the configuration information of the first measurement gap is used for the terminal device to perform a measurement.

2. The method of claim 1, wherein the first measurement gap comprises one or more measurement gap patterns.

3. The method of claim 1 or 2, wherein the configuration information of the first measurement gap is configuration information of a first carrier or a first frequency range.

4. The method of claim 3, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

5. The method of claim 3, wherein the configuration information of the first measurement gap is configuration information of a measurement reference signal on the first carrier, and different measurement reference signals correspond to different measurement gap patterns in the first measurement gap.

6. The method of any one of claims 1 to 5, further comprising:
receiving, by the network device, first indication information reported by the terminal device, wherein the first indication information indicates that the terminal device has a first measurement indication capability;
wherein determining, by the network device, the configuration information of the first measurement gap, comprising:
determining, by the network device, the configuration information of the first measurement gap according to the first indication information.

7. The method of claim 6, wherein the first measurement indication capability comprises at least one of a positioning measurement, a high-speed rail mobility measurement, or a low power consumption measurement of an Internet of Things device.

8. The method of claim 1 or 2, further comprising:
receiving, by the network device, second indication information reported by the terminal device;
wherein determining, by the network device, the configuration information of the first measurement gap, comprising:
in response to that the second indication information indicates that the terminal device has a capability to support frequency range combination or carrier combination, determining, by the network device, the configuration information of the first measurement gap according to the second indication information, wherein the configuration information of the first measurement gap is configuration information of a first frequency range combination or a first carrier combination, or the configuration information of the first measurement gap is configuration information of a terminal device type or a frequency range type.

9. The method of claim 8, wherein the first carrier combination is a combination of carriers on a same frequency range or a combination of carriers on different frequency ranges.

10. The method of claim 8 or 9, wherein a number of the frequency range combination is one or more, or a number of the carrier combination is one or more.

11. The method of any one of claims 8 to 10, wherein the configuration information of the first measurement gap is configuration information of all carriers on different frequency ranges in the first frequency range combination.

12. The method of any one of claims 8 to 10, wherein the configuration information of the first measurement gap is configuration information of different carriers in the first carrier combination.

13. The method of any one of claims 8 to 10, wherein the configuration information of the first measurement gap is configuration information of measurement reference signals of different carriers in the first carrier combination, and different measurement reference signals correspond to different measurement gap patterns in the first measurement gap.

14. The method of claim 8, wherein determining, by the network device, the configuration information of the first measurement gap comprises:
in response to that the second indication information indicates that the terminal device does not have the capability to support frequency range combination or carrier combination, determining, by the network device, the configuration information of the first measurement gap according to the second indication information, wherein the configuration information of the first measurement gap is the configuration information of the terminal device type or the frequency range type.

15. The method of any one of claims 1, 2 or 8 to 14, wherein the configuration information of the first measurement gap is configuration information of a carrier combination with a same maximum receive timing difference (MRTD).

16. The method of any one of claims 1, 2 or 8 to 14, wherein the configuration information of the first measurement gap is configuration information with a same MRTD in an intra-band frequency range combination or configuration information with the same MRTD in an inter-band frequency range combination.

17. The method of claim 15 or 16, wherein the first measurement gap comprises a plurality of measurement gap patterns with a same offset or different offsets.

18. The method of any one of claims 1 to 17, wherein the configuration information of the first measurement gap is configuration information of measurement objects or measurement frequency points whose measurement reference signals are configured with a quasi-co-location (QCL) TypeD relationship.

19. The method of any one of claims 1 to 17, wherein the configuration information of the first measurement gap is configuration information of measurement objects or measurement frequency points of measurement reference signals associated with a same synchronization signal block.

20. The method of claim 19, wherein the configuration information of the first measurement gap is configuration information of measurement objects or measurement frequency points whose measurement reference signals are associated with the same synchronization signal block and configured with a QCL TypeD relationship.

21. A method for configuring a measurement gap, comprising:
receiving, by a terminal device, configuration information of a first measurement gap from a network device; and
performing, by the terminal device, a measurement according to the configuration information of the first measurement gap.

22. The method of claim 21, wherein the first measurement gap comprises one or more measurement gap patterns.

23. The method of claim 21 or 22, wherein the configuration information of the first measurement gap is configuration information of a first carrier or a first frequency range.

24. The method of claim 23, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

25. The method of claim 23, wherein the configuration information of the first measurement gap is configuration information of a measurement reference signal on the first carrier, and different measurement reference signals correspond to different measurement gap patterns in the first measurement gap.

26. The method of any one of claims 21 to 25, further comprising:
reporting, by the terminal device, first indication information to the network device, wherein the first indication information indicates that the terminal device has a first measurement indication capability, and the first indication information is used for the network device to determine the configuration information of the first measurement gap.

27. The method of claim 26, wherein the first measurement indication capability comprises at least one of a positioning measurement, a high-speed rail mobility measurement, or a low power consumption measurement of an Internet of Things device.

28. The method of claim 21 or 22, further comprising:
reporting, by the terminal device, second indication information to the network device, wherein the second indication information is used for the network device to determine the configuration information of the first measurement gap; and in response to that the second indication information indicates that the terminal device has a capability to support frequency range combination or carrier combination, the configuration information of the first measurement gap is configuration information of a first frequency range combination or a first carrier combination, or the configuration information of the first measurement gap is configuration information of a terminal device type or a frequency range type.

29. The method of claim 28, wherein the first carrier combination is a combination of carriers on a same frequency range or a combination of carriers on different frequency ranges.

30. The method of claim 28 or 29, wherein a number of the frequency range combination is one or more, or a number of the carrier combination is one or more.

31. The method of any one of claims 28 to 30, wherein the configuration information of the first measurement gap is configuration information of all carriers on different frequency ranges in the first frequency range combination.

32. The method of any one of claims 28 to 30, wherein the configuration information of the first measurement gap is configuration information of different carriers in the first carrier combination.

33. The method of any one of claims 28 to 30, wherein the configuration information of the first measurement gap is configuration information of measurement reference signals of different carriers in the first carrier combination, and different measurement reference signals correspond to different measurement gap patterns in the first measurement gap.

34. The method of claim 28, wherein the second indication information is used for the network device to determine the configuration information of the first measurement gap; and in response to that the second indication information indicates that the terminal device does not have the capability to support frequency range combination or carrier combination, the configuration information of the first measurement gap is the configuration information of the terminal device type or the frequency range type.

35. The method of any one of claims 21, 22 or 28 to 34, wherein the configuration information of the first measurement gap is configuration information of a carrier combination with a same maximum receive timing difference (MRTD).

36. The method of any one of claims 21, 22 or 28 to 34, wherein the configuration information of the first measurement gap is configuration information with a same MRTD in an intra-band frequency range combination or configuration information with the same MRTD in an inter-band frequency range combination.

37. The method of claim 35 or 36, wherein the first measurement gap comprises a plurality of measurement gap patterns with a same offset or different offsets.

38. The method of any one of claims 21 to 37, wherein the configuration information of the first measurement gap is configuration information of measurement objects or measurement frequency points whose measurement reference signals are configured with a quasi-co-location (QCL) TypeD relationship.

39. The method of any one of claims 21 to 37, wherein the configuration information of the first measurement gap is configuration information of measurement objects or measurement frequency points of measurement reference signals associated with a same synchronization signal block.

40. The method of claim 39, wherein the configuration information of the first measurement gap is configuration information of measurement objects or measurement frequency points whose measurement reference signals are associated with the same synchronization signal block and configured with a QCL TypeD relationship.

41. A network device, comprising:
a processing module, configured to determine configuration information of a first measurement gap; and
a transceiver module, configured to transmit the configuration information of the first measurement gap to a terminal device, wherein the configuration information of the first measurement gap is used for the terminal device to perform a measurement.

42. The network device of claim 41, wherein the first measurement gap comprises one or more measurement gap patterns.

43. The network device of claim 41 or 42, wherein the configuration information of the first measurement gap is configuration information of a first carrier or a first frequency range.

44. The network device of claim 43, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

45. The network device of claim 43, wherein the configuration information of the first measurement gap is configuration information of a measurement reference signal on the first carrier, and different measurement reference signals correspond to different measurement gap patterns in the first measurement gap.

46. The network device of any one of claims 41 to 45, wherein
the transceiver module is further configured to receive first indication information reported by the terminal device, and the first indication information indicates that the terminal device has a first measurement indication capability; and
the processing module is specifically configured to determine the configuration information of the first measurement gap according to the first indication information.

47. The network device of claim 46, wherein the first measurement indication capability comprises at least one of a positioning measurement, a high-speed rail mobility measurement, or a low power consumption measurement of an Internet of Things device.

48. The network device of claim 41 or 42, wherein
the transceiver module is further configured to receive second indication information reported by the terminal device; and
the processing module is specifically configured to in response to that the second indication information indicates that the terminal device has a capability to support frequency range combination or carrier combination, determine the configuration information of the first measurement gap according to the second indication information, wherein the configuration information of the first measurement gap is configuration information of a first frequency range combination or a first carrier combination, or the configuration information of the first measurement gap is configuration information of a terminal device type or a frequency range type.

49. The network device of claim 48, wherein the first carrier combination is a combination of carriers on a same frequency range or a combination of carriers on different frequency ranges.

50. The network device of claim 48 or 49, wherein a number of the frequency range combination is one or more, or a number of the carrier combination is one or more.

51. The network device of any one of claims 48 to 50, wherein the configuration information of the first measurement gap is configuration information of all carriers on different frequency ranges in the first frequency range combination.

52. The network device of any one of claims 48 to 50, wherein the configuration information of the first measurement gap is configuration information of different carriers in the first carrier combination.

53. The network device of any one of claims 48 to 50, wherein the configuration information of the first measurement gap is configuration information of measurement reference signals of different carriers in the first carrier combination, and different measurement reference signals correspond to different measurement gap patterns in the first measurement gap.

54. The network device of claim 48, wherein
the processing module is specifically configured to: in response to that the second indication information indicates that the terminal device does not have the capability to support frequency range combination or carrier combination, determine the configuration information of the first measurement gap according to the second indication information, wherein the configuration information of the first measurement gap is the configuration information of the terminal device type or the frequency range type.

55. The network device of any one of claims 41, 42 or 48 to 54, wherein the configuration information of the first measurement gap is configuration information of a carrier combination with a same maximum receive timing difference (MRTD).

56. The network device of any one of claims 41, 42 or 48 to 54, wherein the configuration information of the first measurement gap is configuration information with a same MRTD in an intra-band frequency range combination or configuration information with the same MRTD in an inter-band frequency range combination.

57. The network device of claim 55 or 56, wherein the first measurement gap comprises a plurality of measurement gap patterns with a same offset or different offsets.

58. The network device of any one of claims 41 to 57, wherein the configuration information of the first measurement gap is configuration information of measurement objects or measurement frequency points whose measurement reference signals are configured with a quasi-co-location (QCL) TypeD relationship.

59. The network device of any one of claims 41 to 57, wherein the configuration information of the first measurement gap is configuration information of measurement objects or measurement frequency points of measurement reference signals associated with a same synchronization signal block.

60. The network device of claim 59, wherein the configuration information of the first measurement gap is configuration information of measurement objects or measurement frequency points whose measurement reference signals are associated with the same synchronization signal block and configured with a QCL TypeD relationship.

61. A terminal device, comprising:
a transceiver module, configured to receive configuration information of a first measurement gap from a network device; and
a processing module, configured to perform a measurement according to the configuration information of the first measurement gap.

62. The terminal device of claim 61, wherein the first measurement gap comprises one or more measurement gap patterns.

63. The terminal device of claim 61 or 62, wherein the configuration information of the first measurement gap is configuration information of a first carrier or a first frequency range.

64. The terminal device of claim 63, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

65. The terminal device of claim 63, wherein the configuration information of the first measurement gap is configuration information of a measurement reference signal on the first carrier, and different measurement reference signals correspond to different measurement gap patterns in the first measurement gap.

66. The terminal device of any one of claims 61 to 65, wherein
the transceiver module is further configured to report first indication information to the network device, wherein the first indication information indicates that the terminal device has a first measurement indication capability, and the first indication information is used for the network device to determine the configuration information of the first measurement gap.

67. The terminal device of claim 66, wherein the first measurement indication capability comprises at least one of a positioning measurement, a high-speed rail mobility measurement, or a low power consumption measurement of an Internet of Things device.

68. The terminal device of claim 61 or 62, wherein
the transceiver module is further configured to report second indication information to the network device, wherein the second indication information is used for the network device to determine the configuration information of the first measurement gap; and in response to that the second indication information indicates that the terminal device has a capability to support frequency range combination or carrier combination, the configuration information of the first measurement gap is configuration information of a first frequency range combination or a first carrier combination, or the configuration information of the first measurement gap is configuration information of a terminal device type or a frequency range type.

69. The terminal device of claim 68, wherein the first carrier combination is a combination of carriers on a same frequency range or a combination of carriers on different frequency ranges.

70. The terminal device of claim 68 or 69, wherein a number of the frequency range combination is one or more, or a number of the carrier combination is one or more.

71. The terminal device of any one of claims 68 to 70, wherein the configuration information of the first measurement gap is configuration information of all carriers on different frequency ranges in the first frequency range combination.

72. The terminal device of any one of claims 68 to 70, wherein the configuration information of the first measurement gap is configuration information of different carriers in the first carrier combination.

73. The terminal device of any one of claims 68 to 70, wherein the configuration information of the first measurement gap is configuration information of measurement reference signals of different carriers in the first carrier combination, and different measurement reference signals correspond to different measurement gap patterns in the first measurement gap.

74. The terminal device of claim 68, wherein the second indication information is used for the network device to determine the configuration information of the first measurement gap; and in response to that the second indication information indicates that the terminal device does not have the capability to support frequency range combination or carrier combination, the configuration information of the first measurement gap is the configuration information of the terminal device type or the frequency range type.

75. The terminal device of any one of claims 61, 62 or 68 to 74, wherein the configuration information of the first measurement gap is configuration information of a carrier combination with a same maximum receive timing difference (MRTD).

76. The terminal device of any one of claims 61, 62 or 68 to 74, wherein the configuration information of the first measurement gap is configuration information with a same MRTD in an intra-band frequency range combination or configuration information with the same MRTD in an inter-band frequency range combination.

77. The terminal device of claim 75 or 76, wherein the first measurement gap comprises a plurality of measurement gap patterns with a same offset or different offsets.

78. The terminal device of any one of claims 61 to 77, wherein the configuration information of the first measurement gap is configuration information of measurement objects or measurement frequency points whose measurement reference signals are configured with a quasi-co-location (QCL) TypeD relationship.

79. The terminal device of any one of claims 61 to 77, wherein the configuration information of the first measurement gap is configuration information of measurement objects or measurement frequency points of measurement reference signals associated with a same synchronization signal block.

80. The terminal device of claim 79, wherein the configuration information of the first measurement gap is configuration information of measurement objects or measurement frequency points whose measurement reference signals are associated with the same synchronization signal block and configured with a QCL TypeD relationship.

81. A network device, comprising:
a memory storing executable program codes; and
a processor and a transceiver, that are coupled to the memory;
wherein the processor is configured to determine configuration information of a first measurement gap; and
the transceiver is configured to transmit the configuration information of the first measurement gap to a terminal device, wherein the configuration information of the first measurement gap is used for the terminal device to perform a measurement.

82. The network device of claim 81, wherein the first measurement gap comprises one or more measurement gap patterns.

83. The network device of claim 81 or 82, wherein the configuration information of the first measurement gap is configuration information of a first carrier or a first frequency range.

84. The network device of claim 83, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

85. The network device of claim 83, wherein the configuration information of the first measurement gap is configuration information of a measurement reference signal on the first carrier, and different measurement reference signals correspond to different measurement gap patterns in the first measurement gap.

86. The network device of any one of claims 81 to 85, wherein
the transceiver is further configured to receive first indication information reported by the terminal device, and the first indication information indicates that the terminal device has a first measurement indication capability; and
the processor is specifically configured to determine the configuration information of the first measurement gap according to the first indication information.

87. The network device of claim 86, wherein the first measurement indication capability comprises at least one of a positioning measurement, a high-speed rail mobility measurement, or a low power consumption measurement of an Internet of Things device.

88. The network device of claim 81 or 82, wherein
the transceiver is further configured to receive second indication information reported by the terminal device; and
the processor is specifically configured to in response to that the second indication information indicates that the terminal device has a capability to support frequency range combination or carrier combination, determine the configuration information of the first measurement gap according to the second indication information, wherein the configuration information of the first measurement gap is configuration information of a first frequency range combination or a first carrier combination, or the configuration information of the first measurement gap is configuration information of a terminal device type or a frequency range type.

89. The network device of claim 88, wherein the first carrier combination is a combination of carriers on a same frequency range or a combination of carriers on different frequency ranges.

90. The network device of claim 88 or 89, wherein a number of the frequency range combination is one or more, or a number of the carrier combination is one or more.

91. The network device of any one of claims 88 to 90, wherein the configuration information of the first measurement gap is configuration information of all carriers on different frequency ranges in the first frequency range combination.

92. The network device of any one of claims 88 to 90, wherein the configuration information of the first measurement gap is configuration information of different carriers in the first carrier combination.

93. The network device of any one of claims 88 to 90, wherein the configuration information of the first measurement gap is configuration information of measurement reference signals of different carriers in the first carrier combination, and different measurement reference signals correspond to different measurement gap patterns in the first measurement gap.

94. The network device of claim 88, wherein
the processor is specifically configured to: in response to that the second indication information indicates that the terminal device does not have the capability to support frequency range combination or carrier combination, determine the configuration information of the first measurement gap according to the second indication information, wherein the configuration information of the first measurement gap is the configuration information of the terminal device type or the frequency range type.

95. The network device of any one of claims 81, 82 or 88 to 94, wherein the configuration information of the first measurement gap is configuration information of a carrier combination with a same maximum receive timing difference (MRTD).

96. The network device of any one of claims 81, 82 or 88 to 94, wherein the configuration information of the first measurement gap is configuration information with a same MRTD in an intra-band frequency range combination or configuration information with the same MRTD in an inter-band frequency range combination.

97. The network device of claim 95 or 96, wherein the first measurement gap comprises a plurality of measurement gap patterns with a same offset or different offsets.

98. The network device of any one of claims 81 to 97, wherein the configuration information of the first measurement gap is configuration information of measurement objects or measurement frequency points whose measurement reference signals are configured with a quasi-co-location (QCL) TypeD relationship.

99. The network device of any one of claims 81 to 97, wherein the configuration information of the first measurement gap is configuration information of measurement objects or measurement frequency points of measurement reference signals associated with a same synchronization signal block.

100. The network device of claim 99, wherein the configuration information of the first measurement gap is configuration information of measurement objects or measurement frequency points whose measurement reference signals are associated with the same synchronization signal block and configured with a QCL TypeD relationship.

101. A terminal device, comprising:
a memory storing executable program codes; and
a processor and a transceiver, that are coupled to the memory;
wherein the transceiver is configured to receive configuration information of a first measurement gap from a network device; and
the processor is configured to perform a measurement according to the configuration information of the first measurement gap.

102. The terminal device of claim 101, wherein the first measurement gap comprises one or more measurement gap patterns.

103. The terminal device of claim 101 or 102, wherein the configuration information of the first measurement gap is configuration information of a first carrier or a first frequency range.

104. The terminal device of claim 103, wherein the configuration information of the first measurement gap is configuration information of intra-frequency frequency points or inter-frequency frequency points on the first carrier; or the configuration information of the first measurement gap is configuration information of intra-frequency frequency points or inter-frequency frequency points on the first frequency range.

105. The terminal device of claim 103, wherein the configuration information of the first measurement gap is configuration information of a measurement reference signal on the first carrier, and different measurement reference signals correspond to different measurement gap patterns in the first measurement gap.

106. The terminal device of any one of claims 101 to 105, wherein
the transceiver is further configured to report first indication information to the network device, wherein the first indication information indicates that the terminal device has a first measurement indication capability, and the first indication information is used for the network device to determine the configuration information of the first measurement gap.

107. The terminal device of claim 106, wherein the first measurement indication capability comprises at least one of a positioning measurement, a high-speed rail mobility measurement, or a low power consumption measurement of an Internet of Things device.

108. The terminal device of claim 101 or 102, wherein
the transceiver is further configured to report second indication information to the network device, wherein the second indication information is used for the network device to determine the configuration information of the first measurement gap; and in response to that the second indication information indicates that the terminal device has a capability to support frequency range combination or carrier combination, the configuration information of the first measurement gap is configuration information of a first frequency range combination or a first carrier combination, or the configuration information of the first measurement gap is configuration information of a terminal device type or a frequency range type.

109. The terminal device of claim 108, wherein the first carrier combination is a combination of carriers on a same frequency range or a combination of carriers on different frequency ranges.

110. The terminal device of claim 108 or 109, wherein a number of the frequency range combination is one or more, or a number of the carrier combination is one or more.

111. The terminal device of any one of claims 108 to 110, wherein the configuration information of the first measurement gap is configuration information of all carriers on different frequency ranges in the first frequency range combination.

112. The terminal device of any one of claims 108 to 110, wherein the configuration information of the first measurement gap is configuration information of different carriers in the first carrier combination.

113. The terminal device of any one of claims 108 to 110, wherein the configuration information of the first measurement gap is configuration information of measurement reference signals of different carriers in the first carrier combination, and different measurement reference signals correspond to different measurement gap patterns in the first measurement gap.

114. The terminal device of claim 108, wherein the second indication information is used for the network device to determine the configuration information of the first measurement gap; and in response to that the second indication information indicates that the terminal device does not have the capability to support frequency range combination or carrier combination, the configuration information of the first measurement gap is the configuration information of the terminal device type or the frequency range type.

115. The terminal device of any one of claims 101, 102 or 108 to 114, wherein the configuration information of the first measurement gap is configuration information of a carrier combination with a same maximum receive timing difference (MRTD).

116. The terminal device of any one of claims 101, 102 or 108 to 114, wherein the configuration information of the first measurement gap is configuration information with a same MRTD in an intra-band frequency range combination or configuration information with the same MRTD in an inter-band frequency range combination.

117. The terminal device of claim 115 or 116, wherein the first measurement gap comprises a plurality of measurement gap patterns with a same offset or different offsets.

118. The terminal device of any one of claims 101 to 117, wherein the configuration information of the first measurement gap is configuration information of measurement objects or measurement frequency points whose measurement reference signals are configured with a quasi-co-location (QCL) TypeD relationship.

119. The terminal device of any one of claims 101 to 117, wherein the configuration information of the first measurement gap is configuration information of measurement objects or measurement frequency points of measurement reference signals associated with a same synchronization signal block.

120. The terminal device of claim 119, wherein the configuration information of the first measurement gap is configuration information of measurement objects or measurement frequency points whose measurement reference signals are associated with the same synchronization signal block and configured with a QCL TypeD relationship.

121. A computer-readable storage medium, comprising instructions that, when running on a computer, cause the computer to execute the method of any one of claims 1 to 20 or any one of claims 21 to 40.
